# EUROPEAN PATENT APPLICATION

(11) **EP 1 231 728 A2**
(43) Date of publication of application: **14.08.2002**
(21) Application number: 01107507.4
(22) Date of filing: 26.03.2001
(51) Int. Cl.: H04J 14/02

(54) **Hierarchical WDM in client-server architecture**

(30) Priority: 07.02.2001 US 779185
(71) Applicant: Redfern Broadband Networks Inc., Wilmington, County of Newcastle, Delaware, 19801 (US); Redfern Broadband Networks Pty Ltd, Eveleigh, New South Wales 1430 (AU)
(72) Inventor: The designation of the inventor has not yet been filed
(74) Representative: Kuhnen & Wacker

(57) **Abstract**

An optical ring network comprising; a plurality of network elements including a core network element interfacing the ring network with an external core network, and at least one ring network element; wherein the core network element includes a first CWDM unit, a first DWDM unit and switching means arranged to cross connect any wavelength channel within or between wavelength bands on the ring network or between the ring network and the core network, and wherein the ring network elements each include; a second CWDM unit and a second DWDM unit, the second CWDM unit being arranged to add/drop at least a first wavelength band at said ring network element from and to the second DWDM unit and to express other wavelength bands onto the next network element.

## Description

### Field of the invention

The present invention relates broadly to an optical ring network and to a method of providing Hierarchical Wavelength Division Multiplexing in a client-server architecture in an optical ring network.

### Background of the invention

Traditionally enterprise voice and data networks in e.g. a metro area have developed around peer-peer oriented services, ring architectures and time division multiplexing (TDM) and time division switching (TDS) technologies.

Peer-peer oriented services requirements occurred since the traffic that stayed within the metro area was much greater than the traffic which was destined for a remote metro area. Telephone Services and Storage Area Network Services are examples of such services.

Ring architectures have evolved as a way of offering path protection for high speed shared services in a metro area.

Since TDM and TDS technologies could be easily integrated into low cost Very Large Scale Integrated (VLSI) devices, this in the past enabled distributed access and switching between any channels on a TDM ring network (such as a SONET/SDH ring). Such distributed access and switching technologies were well matched to the peer-peer service orientation, since if two hubs on a metro ring needed to communicate, they could do so without relying on centralised switching at a core hub.

However, with the emergence of optical networks as potential technology to deal with the vast amount of data to be carried in future networks, this traditional approach proves no longer to be effective. This is largely due to the cost and space required for e.g. a 128x128 optical cross-connect switch in a 128 wavelength ring.

### Summary of the invention

Throughout the specification the following abbreviations will be used:
HWDM: Hierarchical Wavelength Division Multiplexing
CWDM: Coarse Wavelength Division Multiplexing
DWDM: Dense Wavelength Division Multiplexing

The present invention seeks to provide an alternative optical ring network and a method of providing HWDM in a client-server architecture in an optical ring network which can provide a more flexible and cost effective solution.

In accordance with a first aspect of the present invention there is provided an optical ring network comprising a plurality of network elements including a core network element interfacing the ring network with an external core network, and at least one ring network element; wherein the core network element includes a first CWDM unit, a first DWDM unit and switching means arranged to cross connect any wavelength channel within or between wavelength bands on the ring network or between the ring network and the core network, and wherein the ring network elements each include a second CWDM unit and a second DWDM unit, the second CWDM unit being arranged to add/drop at least a first wavelength band at said ring network element from and to the second DWDM unit and to express other wavelength bands onto the next network element.

Accordingly, the invention can provide an optical ring network with high scalability provided by the ability to scale to a larger number of wavelengths at an individual ring network element without impact upon other ring network elements by activating additional wavelengths within each CWDM wavelength band. Additionally, it is possible to increase the number of ring network elements through the addition of CWDM wavelength bands, again without impact upon the existing ring network elements.

Preferably, the second DWDM unit includes a dense wavelength division demultiplexing unit, a dense wavelength division multiplexing unit and a connector means disposed therebetween and arranged, in use, in a manner such that wavelength channels within said first wavelength band are either dropped at the ring network element or expressed onto the next network element, and such that other wavelength channels within said first wavelength band are added.

Advantageously, the connector means is further arranged in a manner such that, in use, it is reconfigurable to selectively express, drop, or add a particular wavelength channel within said first wavelength band.

The connector means may comprise *n* 2x2 optical switches or a single 2*n*x2n optical switch, where *n* is the size of the dense wavelength demultiplexer and multiplexer units.

In accordance with a second aspect of the present invention there is provided a ring network element for use in an optical ring network having a core network element interfacing the ring network with an external core network, the ring network element comprising a CWDM unit and a DWDM unit, the CWDM unit being arranged to add/drop at least a first wavelength band at said ring network element from and to the DWDM unit and to express other wavelength bands onto the next network element.

Preferably, the DWDM unit includes a dense wavelength division demultiplexing unit, a dense wavelength division multiplexing unit and a connector means disposed therebetween and arranged, in use, in a manner such that wavelength channels within said first wavelength band are either dropped at the ring network element or expressed onto the next network element, and such that other wavelength channels within said first wavelength band are added.

Advantageously, the connector means is further arranged in a manner such that, in use, it is reconfigurable to selectively express, drop, or add a particular wavelength channel within said first wavelength band.

The connector means may comprise *n* 2x2 optical switches or a single 2*n*x2*n* optical. switch, where *n* is the size of the dense wavelength demultiplexer and multiplexer units.

In accordance with a third aspect of the present invention there is provided a method of providing HWDM in an optical ring network comprising a plurality of network elements including a core network element interfacing the ring network with an external core network, and at least one ring network element; the method comprising the steps of utilising CWDM and DWDM techniques at the core network element to cross connect any wavelength channel within or between wavelength bands on the ring network or between the ring network and the core network, and utilising CWDM techniques at each ring network element to add/drop at least a first wavelength band at said ring network element and to express other wavelength bands onto the next network element.

Preferably, the method further comprises the step of utilising DWDM techniques at the ring network elements to drop certain wavelength channels within said first wavelength band at the ring network element, to express other wavelength channels within said first wavelength band on to the next network element, and to add wavelength channels within said first wavelength band from the network element.

### Brief description of the drawings

Preferred forms of the present invention will now be described, by way of example only, with reference to the accompanying drawings.

Figure 1 is a schematic drawing illustrating the connectivity of a metro ring embodying the present invention.

Figure 2 is a schematic drawing illustrating the physical representation of a metro ring of Figure 1.

Figure 3 is a schematic drawing illustrating the logical connectivity of the metro ring of Figure 1.

Figure 4 is a schematic drawing illustrating the logical connectivity of the metro ring of Figure 1 in an alternative form.

Figure 5 Optical units within metro hub embodying the present invention.

Figure 6 Line interface, channel switch, and trunk interface cards embodying the present invention.

Figure 7 Possible DWDM Configurations embodying the present invention.

Figure 8 DWDM wavelength maps - interleaved and non-interleaved embodying the present invention.

Figure 9 CWDM Interfaces embodying the present invention.

Figure 10 CWDM band allocation embodying the present invention.

Figure 11 is a schematic drawing illustrating the connectivity of another metro ring embodying the present invention.

Figure 12 is a schematic drawing illustrating the logical connectivity of the metro ring of Figure 11.

Figure 13 is a schematic drawing illustrating the logical connectivity of the metro ring of Figure 11 in an alternative form.

Figure 14 is a schematic drawing illustrating the functional layers of switching, multiplexing and transmission for a particular metro to core hub connection in the metro ring of Figure 11, representative of a method of providing HWDM in a client-server architecture, embodying the present invention.

Figure 15 is a schematic drawing illustrating a detail of one functional layer of Figure 14.

### Detailed description of the embodiments

In the preferred embodiment described an optical ring network is provided which exhibits high scalability provided by the ability to scale a larger number of wavelengths at a ring network element without impact on other ring network elements by activating additional wavelengths within a CWDM wavelength band. Additionally, it is possible to increase the number of ring network elements through the addition of CWDM wavelength bands, again without impact on the existing ring network elements.

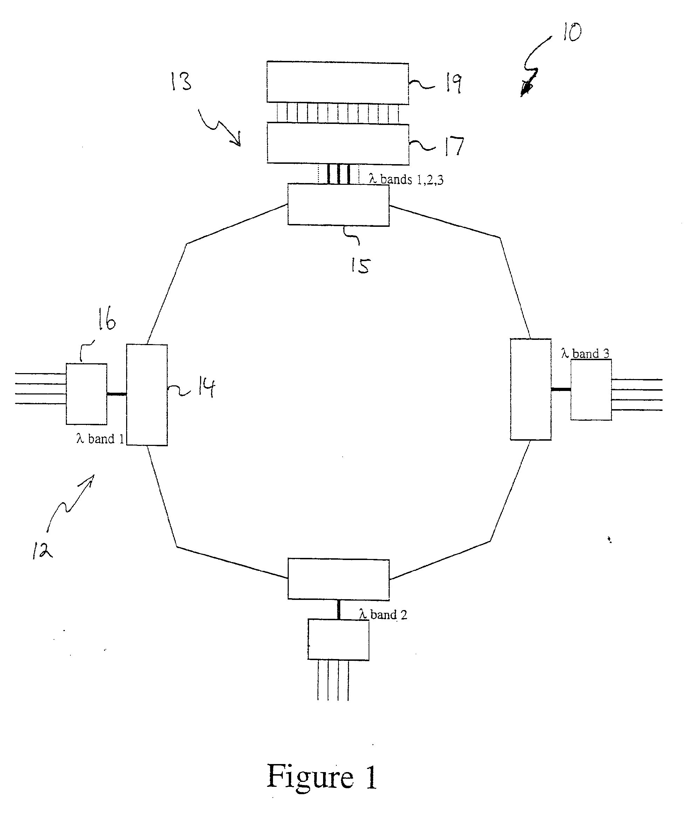

Figure 1 shows a schematic of an optical metro ring network 10 wherein each metro hub e.g. 12 includes a CWDM unit 14 and a DWDM unit 16. Each CWDM unit e.g. 14 is a bandpass filter that will drop e.g. a single wavelength band and has a transit path that will express through all other wavelengths. The core hub 13 contains a CWDM unit 15, a DWDM unit 17 and a switch 19 for cross connecting any wavelength channel e.g. 21 within or between wavelength bands e.g. 20, 22 on the metro ring network 10 or, additionally, between the metro ring network 10 and an external core network (not shown).

The system disclosed is scalable in two ways. First, the activation of wavelengths within each CWDM band enables the capacity of each individual metro hub to be increased without affecting other metro hubs. Second, the addition of further CWDM wavelength bands allows further metro hubs to be added without impacting the existing metro hubs. Thus the scalability of such a system is restricted only be physical limitations, such as e.g. the bandwidth of the express filters, the total available wavelength range, and limitations on how closely wavelength channels may be spaced within each CWDM wavelength band.

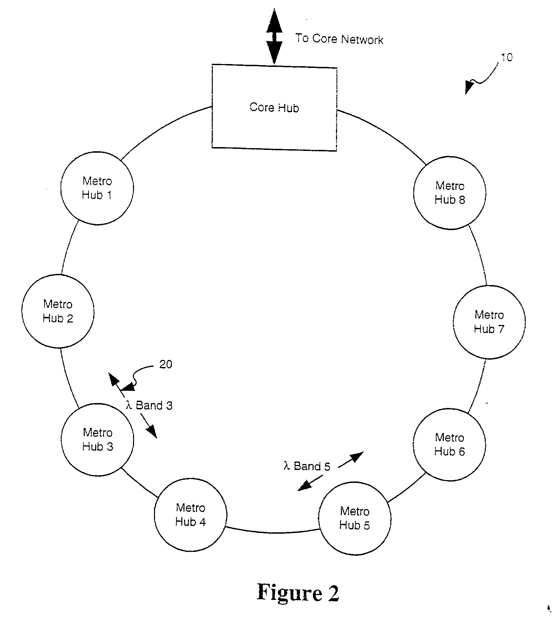

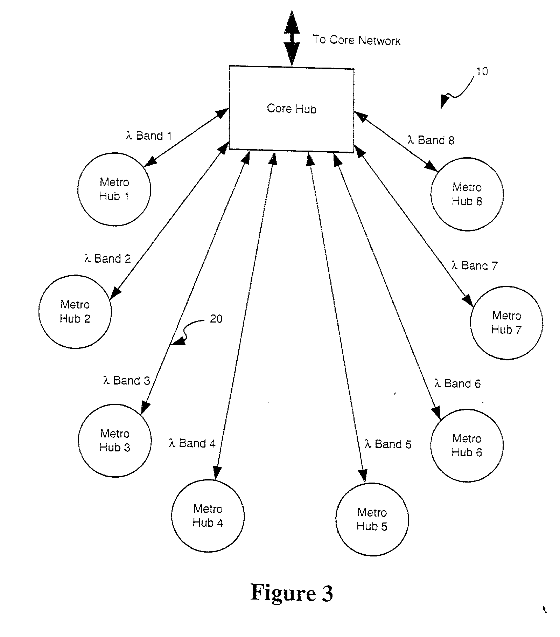

In Figure 2 the metro ring network 10 (expanded to more metro hubs) is shown in a physical representation, and Figure 3 shows it's logical connectivity. Each wavelength band e.g. 20 in figures 2 and 3 is transmitted both ways around the network to enable full 1+1 protection.

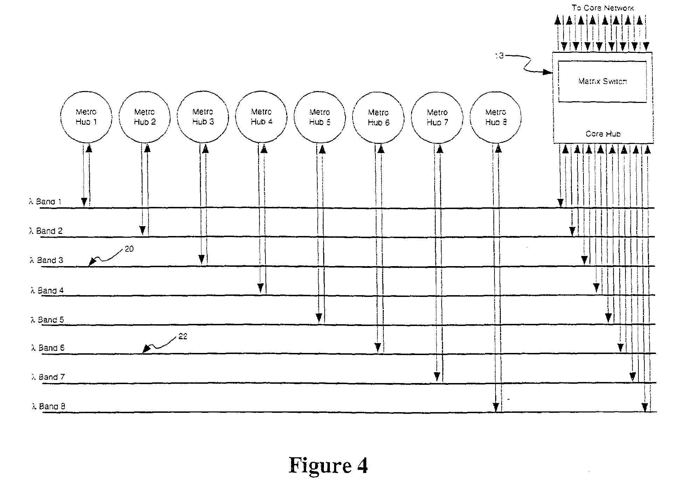

The metro ring network 10 is further represented in figure 4 as a client server architecture. As can be seen the switching required to maintain connectivity between bands, e.g. 20, 22 is contained at the core hub 13. Switching at the metro hubs may be used for channel protection or time-of-day multiplexing and provisioning bandwidth on demand, but is not required to perform the transmission function.

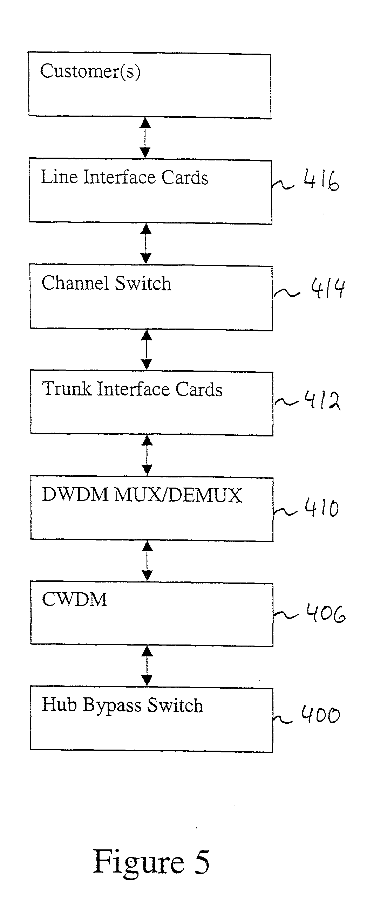

Figure 5 is a block diagram that shows schematically the major units that comprise a metro hub e.g. 14 in the metro ring network 10 (Figures 1 to 4)). Figure 5 shows the logical layout for the different units the optical signal passes through. Each of these units is discussed in the following paragraphs.

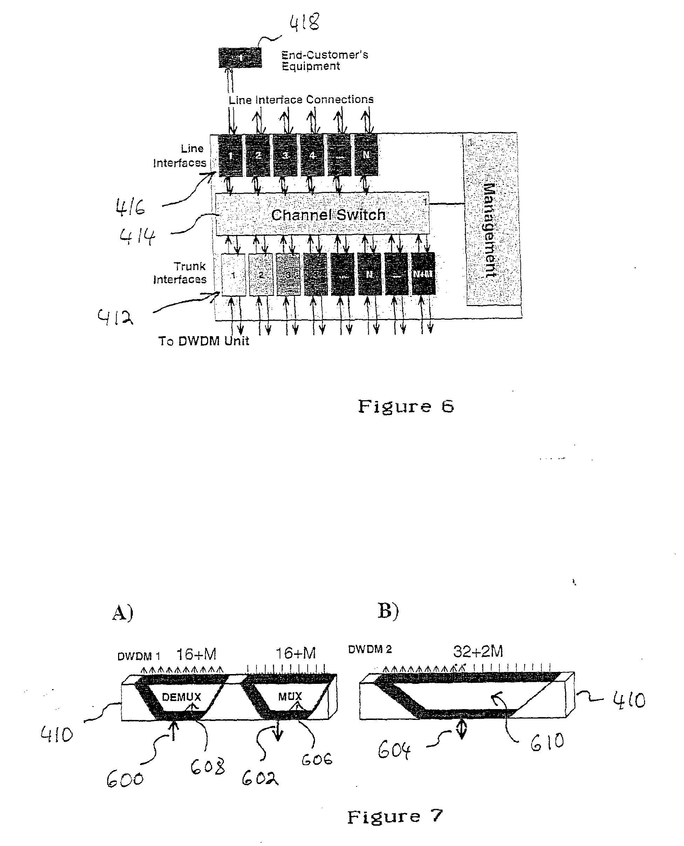

Figure 6 is a block diagram that shows schematically the configuration of the Line Interface Cards 416, Channel Switch 414 and Trunk Interface cards 412 in a metro hub configured for use in the metro ring network 10 (Figures 1 to 4). Each Line Interface Card 416 provides a duplex connection to a Customer Equipment Unit 418, and is connected to a single Trunk Interface Card 412 according to the configuration of the Channel Switch 414. In the hub configuration shown in Figure 6, the hub is capable of providing M:N channel protection, in which M+N Trunk Interface Cards 412 are provided to connect only N Line Interface Cards 416. Thus up to M trunk failures can be restored by switching the corresponding Line Interface Cards 416 to an unused Trunk Interface Card 412 by reconfiguring the Channel Switch 414.

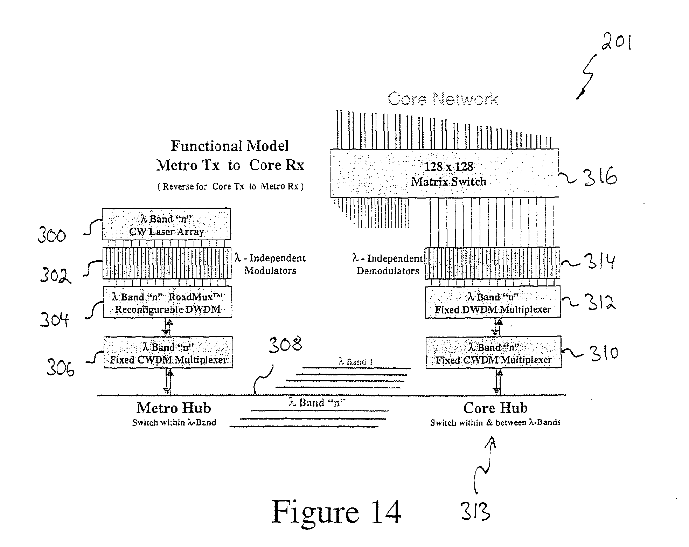

Each Trunk Interface Card 412 requires a suitable single-frequency DWDM laser for transmission of the trunk signal into the network via the DWDM MUX/DEMUX Unit 410, the CWDM Unit 406, the Management MUX/DEMUX Unit 402 and the Hub Bypass Switch 400. Depending upon factors such as, e.g., the channel bit-rate and the maximum transmission distance, this laser may be a relatively low-cost device, such as a directly modulated, temperature-stabilised distributed feedback (DFB) semiconductor laser. Alternatively the laser may be a more costly, higher-performance device, such as a DFB semiconductor laser incorporating an integrated external electro-absorption modulator (DFB-EA), and active wavelength stabilisation, in order to achieve higher bit-rate, longer transmission distance, or more closely spaced DWDM channels. In a further alternative embodiment, the DWDM laser source may be provided separately from the modulator, as will be described later with reference to Figure 14.

As shown in Figure 6, each Trunk Interface Card 412 is connected by a pair of fibres to the DWDM MUX/DEMUX Unit 410 (Figure 5). Each fibre connecting a Trunk Interface Card 412 to the DWDM Unit 410 carries a single wavelength in one direction. Half of these wavelengths will carry data transmitted from the hub and half will carry data to be received at the hub. An exemplary embodiment is described here, in which there are 16 full-duplex channels at each hub comprising 16 transmitted (Tx) wavelengths and 16 received (Rx) wavelengths, i.e. a total of 32 different wavelengths. However, it will be appreciated that a greater or smaller number of channels could be accommodated without departure from the scope of the present invention. The DWDM Unit 410 receives the 16 Tx channels from the Trunk Interface Cards 412 and multiplexes them onto a single fibre. It also receives the 16 Rx channels on a single fibre from the CWDM Unit 406 and demultiplexes them to the 16 Rx fibres connected to the Trunk Interface Cards 412.

Advantageously, the hub may comprise additional Trunk Interface Cards 412 to provide a number of protection channels per direction. In this configuration, M:N channel protection is supported, where N = 16 for the exemplary embodiment, and M is the number of additional Trunk Interface Cards 412 provided.

Turning now to Figures 7A and 7B, which show schematically two exemplary embodiments of the DWDM MUX/DEMUX Unit 410. In the first exemplary embodiment, Figure 7A, the DWDM MUX/DEMUX Unit 410 comprises internally separate optical multiplexing means 606 and demultiplexing means 608, and comprises externally a unidirectional input fibre 600 and a unidirectional output fibre 602. In the second exemplary embodiment, Figure 7B, the DWDM MUX/DEMUX Unit 410 comprises internally a single optical multiplexing and demultiplexing means 610, and comprises externally a single bi-directional input/output fibre 604. In either embodiment the optical multiplexing and demultiplexing means may be, e.g. a free-space diffraction grating based device, or a planar lightwave circuit based device such as an arrayed waveguide grating. It will be appreciated that other embodiments of the DWDM MUX/DEMUX Unit 410, and other optical multiplexing and demultiplexing means, may be employed without departing from the scope of the present invention.

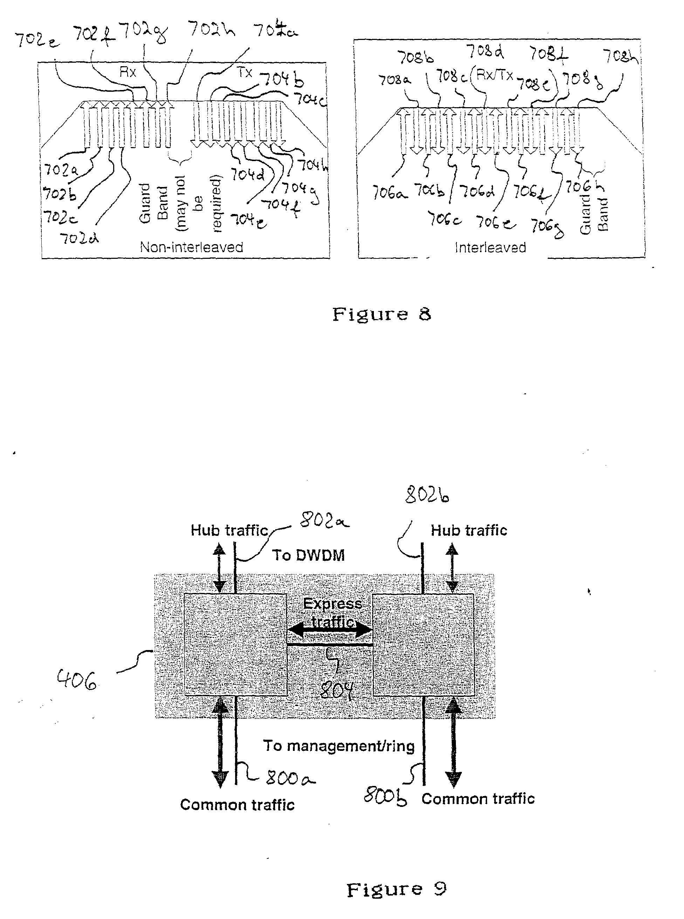

The DWDM Wavelength Map is the allocation of Tx and Rx channels to specific wavelengths for transmission on one or more fibres in the optical ring network. Figures 8A and 8B show schematically two exemplary embodiments of a DWDM Wavelength Map in which there are eight Rx channels, 702*a*-*h* and 706*a*-*h*, and eight Tx channels, 704*a-h* and 708*a*-*h*. It will be appreciated that different numbers of Tx and Rx channels, and other DWDM Wavelength Maps may be employed without departing from the scope of the present invention.

The exemplary embodiment shown in Figure 8A is referred to as a non-interleaved wavelength map, because the Rx wavelengths 702*a*-*h* occupy a wavelength band that is disjoint from the wavelength band occupied by the Tx wavelengths 704*a*-*h*. The exemplary embodiment shown in Figure 8B is referred to as an interleaved wavelength map, because the Rx wavelengths 706*a*-*h* alternate with the Tx wavelengths 708*a*-*h* within the same wavelength band. It will be appreciated that other wavelength maps may be constructed by combining bands comprising different numbers of interleaved and non-interleaved wavelengths without departing from the scope of the present invention.

A non-interleaved wavelength map may be used to simplify network operation and management, and relax tolerances on components to reduce costs, by grouping Rx wavelengths 702*a*-*h* and Tx wavelengths 704*a-h* so that they may easily be separated from each other, e.g. for routing or amplification, by simply using a coarse optical filter. An interleaved wavelength map may be used to enable Rx wavelengths 706*a*-*h* and Tx wavelengths 708*a-h* in a single fibre to be packed more closely together, thus increasing the total capacity of the network. This increase in packing density is achieved because crosstalk may occur, e.g. at filters and in transmission, between closely-spaced wavelengths that are propagating in the same direction, however crosstalk is minimal between wavelengths propagating in opposite directions. Thus interleaving allows the spacing between wavelengths propagating in one direction to be wide enough to minimise crosstalk (e.g. 50 GHz), whereas the spacing between adjacent counterpropagating channels is reduced to half this value (e.g. 25 GHz), effectively doubling the capacity of the fibre.

Advantageously, interleaved and non-interleaved wavelength mapping techniques may be employed in a single network in order to obtain the benefits of simplified operation and management, reduced costs, higher capacity, or a trade-off amongst these, as required.

The CWDM Unit 406 adds/drops the appropriate wavelength blocks for the hub and passes all other express traffic by the hub. Figure 9 shows schematically the logical connections to, from and within the CWDM Unit 406. The CWDM Unit 406 has two trunk fibre connections 800*a*, 800*b* to the optical fibre ring via the Hub Bypass Switch 400 (Figure 5). These two trunk fibres 800a, 800b correspond to the two directions around the ring. Note that signals propagate bi-directionally on each of these fibres 800a, 800b, and that one direction around the ring corresponds to a primary path, and the other to a secondary path to provide protection. Therefore in a minimal configuration, only one transmission fibre is required between each pair of adjacent hubs. The network is therefore able to provide bi-directional transmission and protection on a ring comprising single fibre connections.

The CWDM Unit 406 also has two fibre connections 802*a*, 802*b* to the DWDM MUX/DEMUX Unit 410 (Figure 5), optionally via a Fibre Protection Switch 408. One function of the CWDM Unit 406 is to demultiplex blocks of wavelengths received on the trunk fibre connections 800*a*, 800*b* and transfer them to the hub via the fibre connections 802*a*, 802*b*. A second function of the CWDM Unit 406 is to accept blocks of wavelengths transmitted by the hub via the fibre connections 802*a*, 802*b* and multiplex them onto the trunk fibre connections 800*a*, 800*b*. A third function of the CWDM Unit 406 is to pass all trunk wavelengths received on the trunk fibre connections 800*a*, 800*b* which are not demultiplexed at the hub across to the opposite trunk fibre connection 800*b*, 800*a* via the Express Traffic path 804. Advantageously, the CWDM Unit 406 should provide high isolation, i.e. signals destined for the hub traffic fibres 802*a*, 802*b* should not appear in the Express Traffic path 804 and vice versa, and should have low insertion loss, i.e. ring traffic passing between the trunk fibres 800*d*, 800*b* via the Express Traffic path 804 should experience minimum attenuation.

The allocation of the wavelength bands that are added and dropped by the CWDM Unit 406 (Figure 5) determines the logical connectivity of the network and the number of channels allocated to the hubs. A number of exemplary CWDM Band Allocation schemes are now disclosed. These exemplary schemes are based on using the conventional transmission band, referred to as "C-Band", which spans the wavelength range from around 1530 nm to 1560 nm, or additionally using the long-wavelength transmission band, referred to as "L-Band", which spans the wavelength range from around 1580 nm to 1610 nm. In these exemplary allocation schemes the wavelength spacing is assumed to be 50 GHz (approximately 0.4 nm). It is further assumed that each hub comprises 16 Trunk Interface Cards 412 (Figure 5) and 16 Line Interface Cards 416 (Figure 2), and thus requires 16 Tx wavelengths and 16 Rx wavelengths. It will be appreciated that other transmission bands, alternative wavelength spacings, and hubs with different numbers of Trunk Interface Cards 412 (Figure 5) and Line Interface Cards 416 (Figure 5), may be employed without departing from the scope of the present invention.

The CWDM Band Allocation determines the number of hubs that can transmit and receive on a single fibre ring. The options available include:
- using C-Band;
- using C+L-Bands;
- using a single continuous wavelength band comprising both Tx wavelengths and Rx wavelengths;
- using separate wavelength bands comprising Tx wavelengths and Rx wavelengths.

If C-Band only is used then two hubs may be accommodated on a single fibre. If C+L-Bands are used then four hubs may be accommodated on a single fibre. If additional hubs are required, then further Tx and Rx channels can be provided using the same wavelengths within the C- and L-bands transmitted on additional fibres. It will be appreciated that, although in the example presented here 16 Tx channels and 16 Rx channels are provided at each hub, there is a trade-off between the number of hubs supported, the number of Tx and Rx channels per hub, and the number of fibres required.

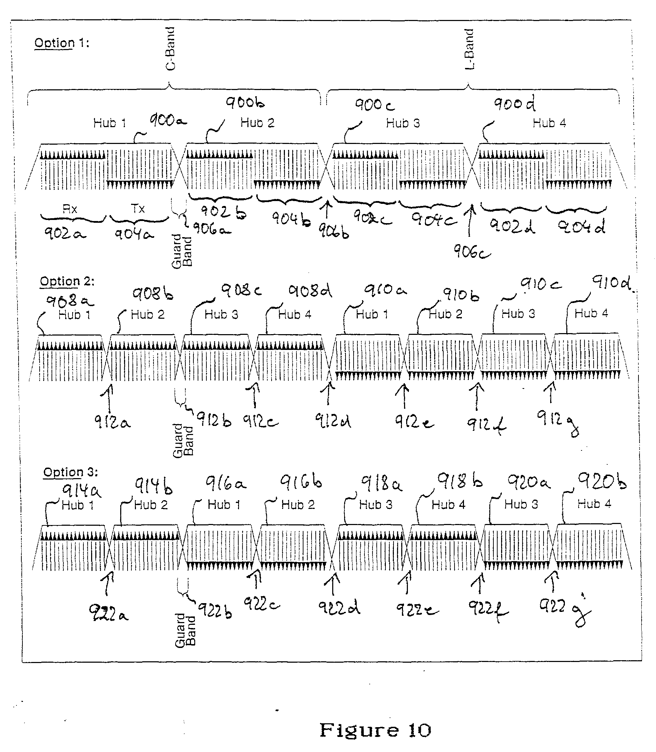

Figures 10A-C illustrates schematically three exemplary allocation schemes based on the use of C+L-Bands to support four hubs. In Figure 10A each hub is allocated a single continuous wavelength band 900*a*-*d* comprising both Tx wavelengths and Rx wavelengths. Within each CWDM Band 900*a*-*d* the shorter wavelengths are allocated to Rx channels 902*a*-*d* and the longer wavelengths are allocated to Tx channels 904*a*-*d*. The CWDM Bands 900*a*-*d* are separated by Guard Bands 906*a*-*c* which allow for the finite roll-off rate at the edges of the CWDM Band filters to minimise crosstalk between bands.

In Figure 10B each hub is allocated a wavelength band 908*a*-*d* within the C-Band for Rx wavelengths and a wavelength band 910*a*-*d* within the L-Band for Tx wavelengths. The CWDM Bands 908*a*-*d*, 910*a*-*d* are separated by Guard Bands 912*a*-*g* which allow for the finite roll-off rate at the edges of the CWDM Band filters to minimise crosstalk between bands.

In Figure 10C each hub is allocated two separate wavelength bands within either the C-Band or L-Band for Tx wavelengths and Rx wavelengths. Hub 1 and Hub 2 are allocated one band each 914*a*, 914*b* within the C-Band for Rx wavelengths, and another band 916*a*, 916*b* within the C-Band for Tx wavelengths. Hub 3 and Hub 4 are allocated one band each 918*a*, 918*b* within the L-Band for Rx wavelengths, and another band 920*a*, 920*b* within the L-Band for Tx wavelengths. The CWDM Bands 914*a*, 914*b*, 916*a*, 916*b*, 918*a*, 918*b*, 920*a*, 920*b* are separated by Guard Bands 922*a*-*g* which allow for the finite roll-off rate at the edges of the CWDM Band filters to minimise crosstalk between bands.

With any of these exemplary allocation schemes, the total number of channels may be increased by deploying additional hubs and a corresponding number of additional fibres.

The Hub Bypass Switch 400 (Figure 5) physically connects the ring to the hub and is also used to switch the hub out of the ring while still passing ring traffic.

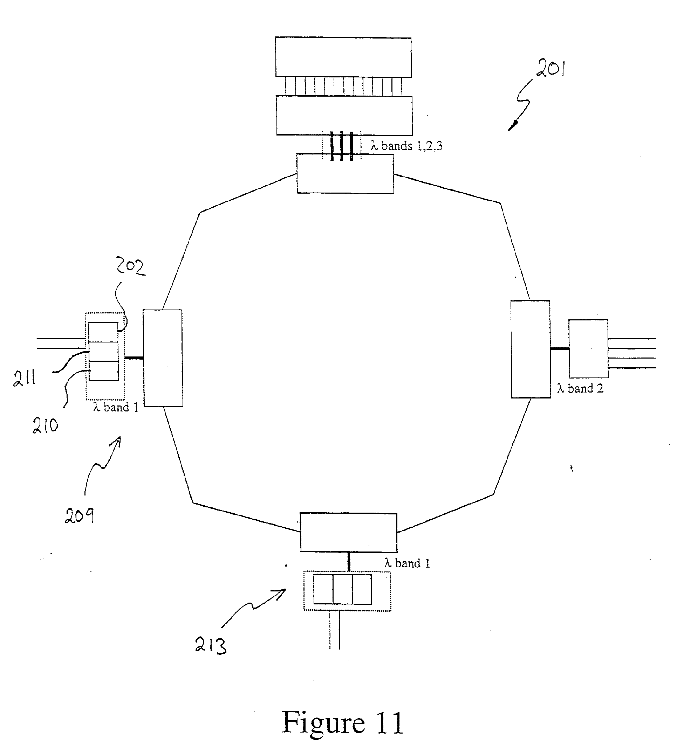

In Figure 11, the addition of a reconfigurable optical add/drop multiplexer (ROADM) to a metro ring network 201 configuration in another preferred embodiment is shown in a logical configuration. In place of a terminal DWDM unit at the metro hubs e.g. 209 (compare Figure 1), there are two such mux/demux units 202, 210, connected by a connector unit 211. This enables a wavelength channel within a particular band to be expressed on to the next node using this band. This therefore allows more than one node to use the same CWDM band, in Figure 11 hubs 209 and 213. This enables the HWDM system to be much more flexible and scalable. In conjunction with low-cost optical add/drop multiplexers used where only a single duplex channel is required to be dropped then a system that meets the combined need for low-up front cost and flexible scalability to high capacity is being provided.

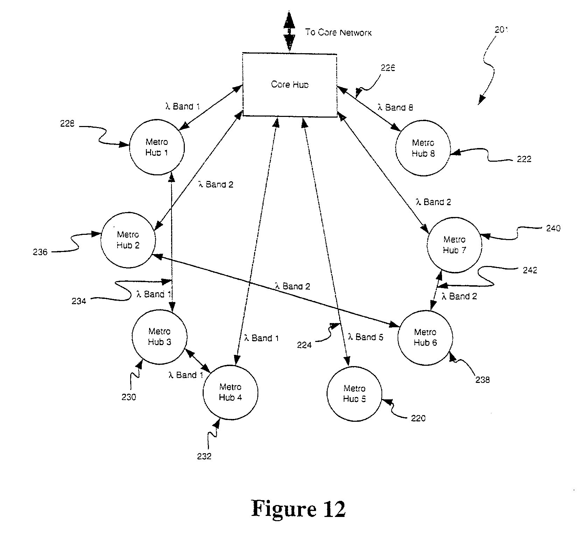

Figure 12 shows the logical connection of the metro ring network 201 (expanded to more metro hubs). The metro ring network 201 includes metro hubs 220 and 222, each of which use individual wavelength bands 224, 226, with no other metro hub using those same respective bands 224, 226. Furthermore, the metro ring network 201 comprises two groups of metro hubs, wherein each group of metro hubs uses the same wavelength band but different wavelength channels within those bands.

More particularly, metro hubs 228, 230, and 232 use the same wavelength band 234, and metro hubs 236, 238, and 240 use the wavelength band 242.

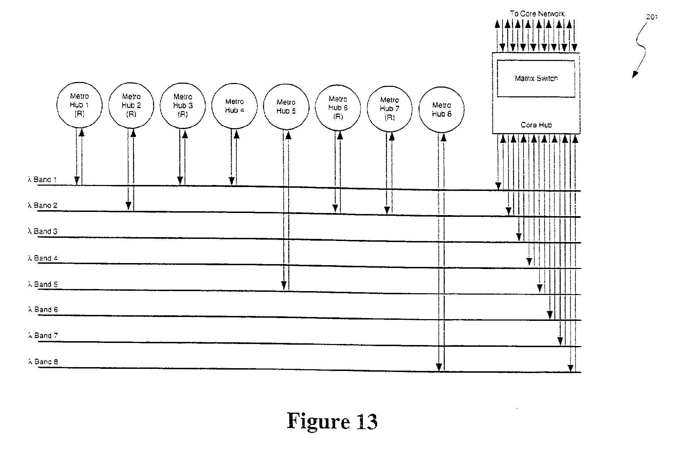

In Figure 13, the ring network 201 is represented in an alternative fashion to illustrate the client-server architecture. It will be appreciated by a person skilled in the art that for each group of metro hubs using the same wavelength band, a band otherwise reserved for an individual metro hub becomes free, and at the same time further scalability can be achieved through the addition of metro hubs to the respective groups.

Figure 14 illustrates the functional layers of switching, multiplexing and transmission for the metro to core hub connection in the metro ring structure 201. In Figure 14 the function of generating the DWDM light has been separated from the function of modulating the light with the transmitted signal to illustrate this alternative embodiment, however it will be appreciated that separate directly or externally modulated laser sources may also be used, as described previously with reference to Figures 5 and 6.

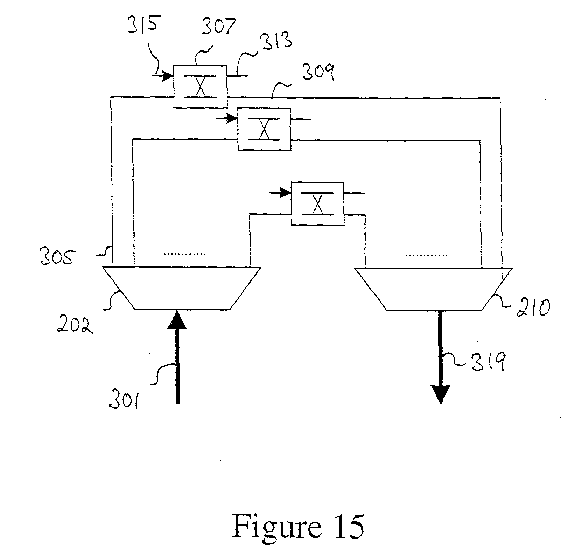

The functional layers shown in Figure 14 comprise:
- An array 300 of Continuous Wave (CW), highly stable light sources corresponding to the DWDM wavelengths used by the hub for transmission of data signals. Since the wavelengths within an array 300 are fixed, there need only be spares of each array 300, not of individual lasers. This greatly simplifies spares holdings. Preferably, the CW laser array 300 comprises Fibre Lasers that have the advantages of high wavelength stability, passive temperature compensation, low power consumption, and high robustness and reliability.
- An array 302 of broadband, low dispersion modulators for impressing high speed data signals on to the CW light. These do not need to be wavelength-specific, thus resulting in simpler spares holdings.
- A reconfigurable optical add-drop multiplexer (ROADM) 304 which enables optimisation of wavelengths multiplexed to the Metro Hubs connected to the same wavelength band. This is achieved by the switching of traffic on wavelengths within a wavelength band. The ROADM 304 will be described in more detail below with reference to Figure 15.
- A higher-order fixed metro hub CWDM multiplexer 306 for optimising the multiplexing of Hub traffic onto a large number (e.g. 64) of wavelengths on a fibre. Note that the CWDM multiplexer 306 is actually bi-directional, and performs both multiplexing and demultiplexing functions.
- A fibre ring 308.
- A higher-order fixed core hub CWDM multiplexer 310. Note that the CWDM multiplexer 310 is actually bi-directional, and performs both multiplexing and demultiplexing functions.
- A fixed DWDM multiplexer 312 for connecting to and from the Core Hub 313, all DWDM channels groomed into a CWDM wavelength band. Note that the DWDM multiplexer 312 is actually bi-directional, and performs both multiplexing and demultiplexing functions.
- An array 314 of high bandwidth demodulators for receiving the transmitted data signals from the metro hub transmitters 300, 302.
- A large matrix switch 316 for cross connecting any wavelength channel within or between wavelength bands on the Metro Ring, or additionally, between the Metro Ring and the Core Network. The matrix switch may comprise a multi-rate electronic crosspoint switch. Suitable commercially available electronic switches include the CX20472 34x34 crosspoint switch, the CX20462 68x68 crosspoint switch, and the CX20487 136x136 crosspoint switch manufactured by Conexant, depending upon the size of switch required. Larger switches may be constructed if required by connecting smaller crosspoint switches in a suitable arrangement, e.g. a Clos configuration. Alternatively, the electronic signals may be converted back to short-haul optical signals, and the matrix switch may then comprise an optical switch.

Turning now to Figure 15, the details of the ROADM 304 will be described below.

The DWDM signal 301 enters the ROADM 304 coming from the output of the CWDM Unit 306 (Figure 14). The DWDM Demultiplexer 202 separates the DWDM channels onto separate fibres e.g. 305. The DWDM Demultiplexer 202 may comprise e.g. a free-space diffraction grating based device, or a planar lightwave circuit based device such as an arrayed waveguide grating.

Each channel is input to a 2x2 optical crossbar switch e.g. 307, which may be in either the bar state or the cross state. The optical crossbar switch 307 may comprise an electronically controlled optoelectronic crossbar switch.

When the optical crossbar switch 307 is in the bar state, the corresponding DWDM channel carried in fibre 305 is connected to the output fibre 309 of the switch 307 that is directed towards the DWDM multiplexer 210. In this state, the DWDM channel is an Express DWDM Channel that bypasses the hub at which the ROADM 304 is located and returns to the network via the CWDM Unit 306 (Figure 14).

When the optical crossbar switch 307 is in the cross state, the corresponding DWDM channel carried in fibre 305 is connected to the drop port 313 of the switch 307, and an optical signal at the add port 315 of the switch 307 is connected to the output fibre 309 of the switch 307 that is directed towards the DWDM multiplexer 210. The added channel must have the same wavelength as the dropped channel. In this state, the DWDM channel is a Hub DWDM channel that is terminated at the hub at which the ROADM 304 is located.

Note that the components comprising the ROADM are bi-directional, and that the directions of the arrows shown in Figure 15 are exemplary, not restrictive. The fact that in the exemplary embodiment shown in Figure 15 both the drop port 313 and the add port 315 are provided means that in that ROADM 304 is capable to be used in an environment in which transmission directions between the hub at which the ROADM 304 is located and the Core Hub 313 (Figure 14) is reversible if required.

All outgoing channels carried on the respective output fibres, e.g. 309, comprising Express Channels and Hub Channels, pass to the DWDM Multiplexer 210 where they are multiplexed onto a single output fibre 319. The output signal carried on the single output fibre 319 goes to the input of the CWDM Unit 306 (Figure 14). The DWDM Multiplexer 210 may comprise e.g. a free-space diffraction grating based device, or a planar lightwave circuit based device such as an arrayed waveguide grating.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. An optical ring network comprising;
- a plurality of network elements including a core network element interfacing the ring network with an external core network, and at least one ring network element;
wherein the core network element includes:
- a first CWDM unit,
- a first DWDM unit and
-- switching means arranged to cross connect any wavelength channel within or between wavelength bands on the ring network or between the ring network and the core network,
and wherein the ring network elements each include :
- a second CWDM unit and
- a second DWDM unit,
the second CWDM unit being arranged to add/drop at least a first wavelength band at said ring network element from and to the second DWDM unit and to express other wavelength bands onto the next network element.

2. An optical network as claimed in claim 1, wherein the second DWDM unit includes:
- a dense wavelength division demultiplexing unit,
- a dense wavelength division multiplexing unit and
- a connector means disposed therebetween and arranged, in use, in a manner such that wavelength channels within said first wavelength band are either dropped at the ring network element or expressed onto the next network element, and such that other wavelength channels within said first wavelength band are added.

3. An optical network as claimed in claim 2, wherein the connector means is further arranged in a manner such that, in use, it is reconfigurable to selectively express, drop, or add a particular wavelength channel within said first wavelength band.

4. An optical network as claimed in claim 3, wherein the connector means comprises n 2x2 optical switches or a single 2nx2n optical switch, where n is the size of the dense wavelength demultiplexer and multiplexer units.

5. A ring network element for use in an optical ring network having a core network element interfacing the ring network with an external core network, the ring network element comprising:
- a CWDM unit and
- a DWDM unit, the CWDM unit being arranged to add/drop at least a first wavelength band at said ring network element from and to the DWDM unit and to express other wavelength bands onto the next network element.

6. A network element as claimed in claim 5, wherein the DWDM unit includes:
- a dense wavelength division demultiplexing unit,
- a dense wavelength division multiplexing unit and
- a connector means disposed therebetween and arranged, in use, in a manner such that wavelength channels within said first wavelength band are either dropped at the ring network element or expressed onto the next network element, and such that other wavelength channels within said first wavelength band are added.

7. A network element as claimed in claim 6, wherein the connector means is further arranged in a manner such that, in use, it is reconfigurable to selectively express, drop, or add a particular wavelength channel within said first wavelength band.

8. A network element as claimed in claim 7, wherein the connector means comprises n 2x2 optical switches or a single 2nx2n optical switch, where n is the size of the dense wavelength demultiplexer and multiplexer units.

9. A method of providing HWDM in an optical ring network comprising a plurality of network elements including a core network element interfacing the ring network with an external core network, and at least one ring network element; the method comprising the steps of:
- utilising CWDM and DWDM techniques at the core network element to cross connect any wavelength channel within or between wavelength bands on the ring network or between the ring network and the core network, and
- utilising CWDM techniques at each ring network element to add/drop at least a first wavelength band at said ring network element and to express other wavelength bands onto the next network element.

10. A method as claimed in claim 9, wherein the method further comprises the step of utilising DWDM techniques at the ring network elements to drop certain wavelength channels within said first wavelength band at the ring network element, to express other wavelength channels within said first wavelength band on to the next network element, and to add wavelength channels within said first wavelength band from the network element.
